# EUROPEAN PATENT SPECIFICATION

(11) **EP 2 075 175 B1**
(45) Date of publication and mention of the grant of the patent: **22.12.2010**
(21) Application number: 07124104.6
(22) Date of filing: 27.12.2007
(51) Int. Cl.: B62D 47/02, B60K 1/02, B60K 7/00, B60K 17/04, B62D 31/02

(54) **Urban transport vehicle with small wheels**
Transportfahrzeug mit kleinen Rädern für den Stadtverkehr
Véhicule de transport urbain ayant des roues de diamètre réduit

(43) Date of publication of application: 01.07.2009
(73) Proprietor: Iveco France S.A., 69200 Vénissieux (FR)
(72) Inventor: Desneux, Alexandre, 38460, CHAMAGNIEU (FR)
(74) Representative: Borsano, Corrado

(56) References cited:
- EP-A- 1 327 573
- WO-A-02/26544
- DE-A1- 1 680 604
- DE-A1- 1 960 991
- DE-U1- 29 518 401
- US-A1- 2001 011 611

## Description

This invention relates to an urban transport vehicle with small wheels.

The invention relates to all types of transport vehicles whose route involves at least one station stop, during which people are likely to board the vehicle and also alight from it. It relates to such a vehicle, which may or may not be driven in a dedicated lane, in particular by means of electric wires, rails or even optical means.

More specifically, the invention relates to transport vehicles in category M3 according to European Directive 70/156/CEE. This being the case, the vehicle is likely to carry at least 8 passengers, who may be sitting or standing. The total live load of this kind of vehicle is typically over 5 metric tons, while its overall length is over 5.5 metres.

This being the case, transport vehicles according to this invention include in particular, but not exclusively, buses or trolleybuses. This type of vehicle typically includes a chassis mounted on at least one axle, which supports wheels fitted with tyres.

Usually this vehicle body has various seats intended for passengers along its lateral sides. These seats may be single, that is they can hold just one passenger, or multiple, in that they can allow several passengers to sit next to each other.

The aforementioned wheels are associated with wheel arches, on which some of the seats are placed. Lastly, the rows of seats facing each other delimit a central corridor, which in particular allows passengers to move through the vehicle.

From prior art patent document DE 1960991 A1 it's known an urban transport vehicle of the bus type comprising a body mounted on axles, each axle having at least two wheels placed either side of the body; the vehicle has a total live load of more than 5 tons and an overall length of more than 5.5 metres, with the wheels of at least one cited axle having diameter of 765 mm.

From prior art document DE 29518401 U1 it's also known an urban transport vehicle of the bus type whose drive wheels are driven by an electric motor, whereby two reduction gears are provided between the electric motor and the corresponding wheel.

That said, the invention relates to a transport vehicle which is improved in relation to the prior art. Specifically it provides such a vehicle with a simplified structure, of a more modular form of construction, in which passenger comfort and ease of movement are better than in normal arrangements.

The invention also provides such a transport vehicle with a compact high efficiency drive which can be matched with brakes of the standard type.

To this end, it has as its object an urban transport vehicle according to appended claim 1. Advantageous features are the subject of subsidiary claims.

The invention will be described below with reference to the appended drawings, provided purely by way of non-limiting examples, in which:
- Figure 1 is a view from above illustrating a transport vehicle according to the invention;
- Figure 2 is a side view illustrating in greater detail a wheel arch provided in the transport vehicle according to the invention;
- Figure 3 is a view from above on a larger scale illustrating the steering angle of the vehicle's wheels according to the invention;
- Figures 4 and 5 are views from the side and above respectively, similar to Figures 2 and 3, illustrating the wheels of a vehicle according to the state of the art;
- Figures 6, 8 and 10 are perspective views illustrating three drive arrangements for the wheels of the vehicle according to the invention,
- Figures 7, 9 and 11 are diagrammatical views illustrating kinematic diagrams for these three wheel drive modes, and
- Figures 12 to 14 are views from above, similar to Figure 1, illustrating three embodiments of the transport vehicle according to the invention.

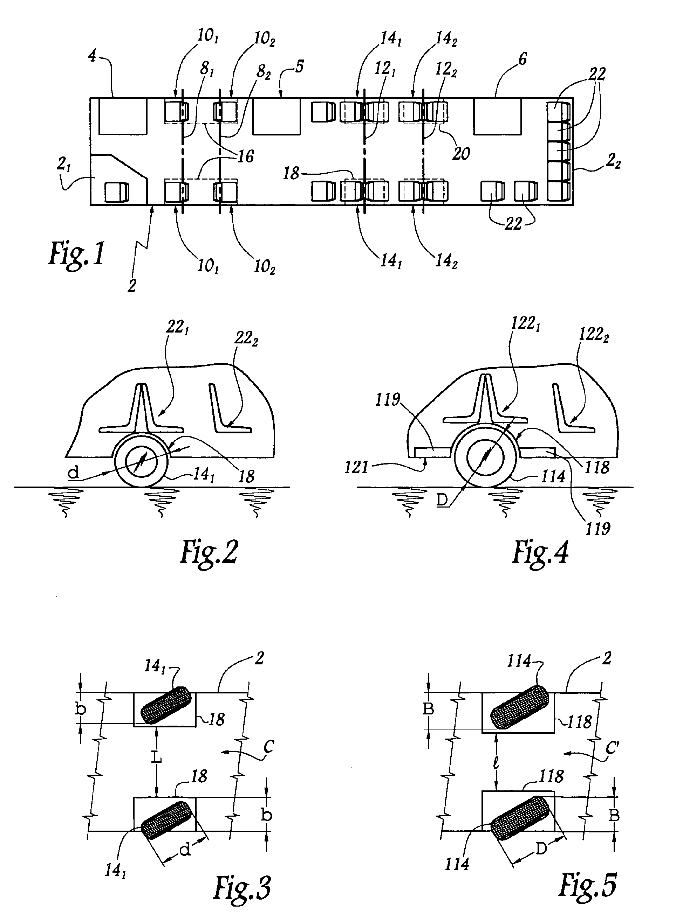

Figure 1 illustrates a transport vehicle according to the invention which comprises a body 2, the front end of which is numbered 2₁, situated on the left of the drawing, while the rear end is numbered 2₂. Body 2 is fitted with three side doors, respectively front 4, middle, 5 and rear 6.

Body 2 is supported by wheels with tyres. More specifically, there are two front axles 8₁ and 8₂, each of which is equipped with two drive wheels, namely a first pair 10₁ and a second pair 10₂.

There are also provided two rear axles 12₁ and 12₂, each of which is equipped with two drive wheels, namely a first pair 14₁ and a second pair 14₂. However, as a variant, only one pair of the rear wheels might be drive wheels, specifically pair 14₁. In this case the other pair, for example 14₂, is steered through a smaller sweep angle than front wheels 10₁ and 10₂.

Furthermore 16 refers to the two front wheel arches which extend on either side of the body above axles 8, and 8₂. Also 18 refers to the two front wheel arches extending above axle 12₁, and 20 refers to the two wheel arches extending above axle 12₂. Lastly, the transport vehicle according to the invention is fitted with seats 22, of any known type, which may for example be single, double, fixed or folding.

Figure 2 illustrates more precisely two seats 22₁ and 22₂, respectively above and close to wheel arch 18. According to this invention, all the wheels, including those numbered 14₁, have an external diameter d of between 700 and 750 mm, preferably between 730 and 740 mm and in particular close to 737 mm. This diameter d corresponds to a wheel with a tyre that is nominally inflated, i.e. with a pressure for example of approximately 9 bars with a load of approximately 2.5 metric tons per wheel.

Seat 22₁ is located over wheel arch 18 and is fixed by any appropriate means. Given that the value d of the diameter of the wheel is relatively small, seat 22₁ located above wheel arch 18 lies roughly at the same height as adjacent seat 22₂ which is at a distance from said wheel arch. In other words, seat 22₁ placed above the wheel arch is not raised in relation to the other seats, so that, as will become clear below, it is not necessary to modify the arrangement of the floor near this wheel arch.

Figure 4 illustrates a wheel 114 fitted to a vehicle according to the state of the art, whose diameter D is substantially greater than that d of wheels 10 and 14 used in the invention. Thus, said diameter D is usually around 974 mm.

This being the case, wheel arch 118 extending above said wheel 114 is of greater height than that of 18 in Figure 2. Similarly, seat 122₁ mounted on this wheel arch is higher than 122₂ which is located beside the wheel arch.

It is therefore necessary to allow for a raised section 119, extending from the floor 121 of this conventional transport vehicle. The presence of this raised section 119 is explained by the fact that seat portion of seat 122₁ must not be above a certain height in relation to the supporting surface for the feet, which is defined by said raised section 119.

A further characteristic of the invention is illustrated in Figure 3, which is a view from above illustrating the steering-angle of wheels 14₁. Given that they have a relatively small diameter d, the sweep of these wheels during steering is also quite small. Thus the value of this maximum sweep distance is indicated by b, which corresponds to the distance between the edge of the body and the furthest end of the wheel in its maximally pivoted position. Consequently, it follows that wheel arch 18 has a relatively small width.

This being the case, the two opposite wheel arches 18 delimit a central corridor C, of width L. For the reasons mentioned above, the value of this width L of the corridor is relatively large, specifically in the region of 1200 mm.

This should be compared with the state of the art described with reference to Figure 4, for which the steering-angle of the wheels is shown in Figure 5. B denotes the maximum sweep of wheels 114, which have a diameter D. Said value B is greater than b according to the invention, so that the width of wheel arches 118 is much greater than that of wheel arches 18. As a consequence corridor C' of known vehicles, which is delimited by these wheel arches, has a width I which is much less than that provided by the invention, and is typically around 900 mm.

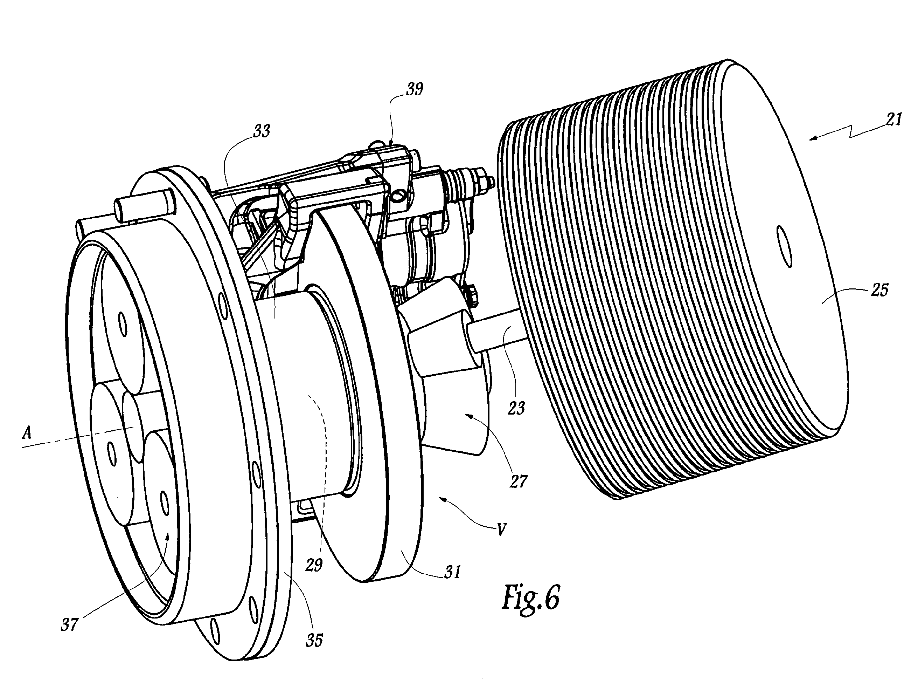

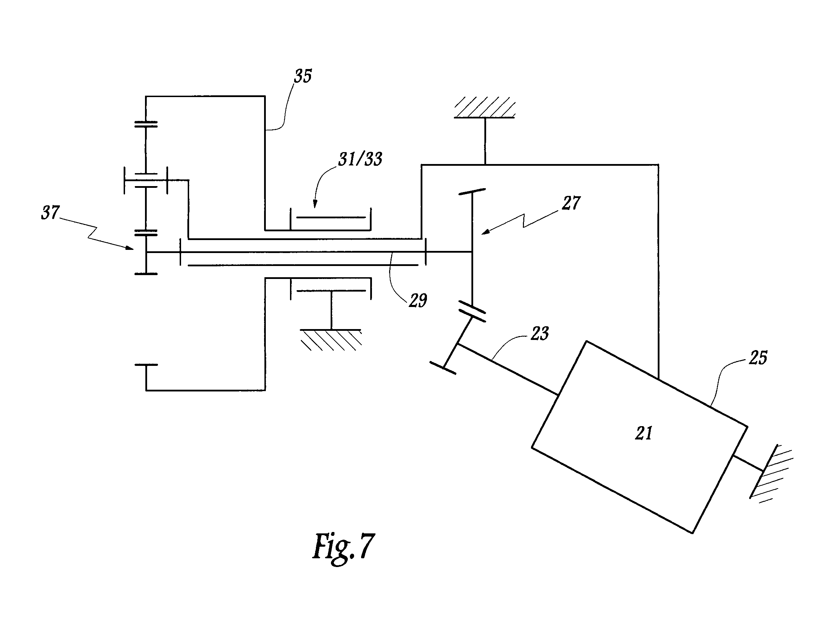

Figures 6 and 7 illustrate a first embodiment relating to the drive for wheels 14 of small diameter according to the invention.

First of all there is an electric motor 21, which is mounted on the chassis of the vehicle. This electric motor 21, of a conventional type, has a rotating shaft 23 which extends obliquely with respect to the transverse axis A of rotation of the wheels. It will be noted that this motor 21 is not fixed in rotation with the wheels, at least when this rotation takes place in that transverse axis. Conversely, this motor 21 is of one piece with steering movements of the wheel on which it is mounted, namely when the wheel pivots about a substantially vertical axis.

This motor 21 has a cylindrical body 25, the diameter D₂₅ of which is typically between 300 and 330 mm, and whose length L₂₅ is typically between 200 and 250 mm. Furthermore, the maximum rotation speed of this motor lies between 8,000 and 10,000 rpm.

Shaft 23 acts together with a conical gear 27, of a type which is in itself known, the output 29 from which extends substantially along the aforesaid axis A. This output 29 extends successively through brake disk 31, disk support 33 and rim 35 of wheel 14. This output 29 engages an epicyclical gear train 37, of a type which is in itself known. Finally the output of this gear train 37 drives the rim, and consequently the wheel, directly.

The reduction coefficient of the conical gear is for example between 2.5 and 3.5, in particular close to 3. The reduction coefficient associated with the epicyclical gear train is between 4 and 6, in particular close to 5. This being the case, the total reduction coefficient between the motor and the wheel is for example between 10 and 20, in particular close to 15.

V indicates the "overall volume" of the braking assembly, comprising disk 31, its support 33, as well as braking member 39, of a conventional type, which is for example of a hydraulic nature. This volume V is roughly in the shape of a cylinder, the central axis of which is that A about which the wheels rotate, and whose diameter is defined by the distance between the central axis and the outer periphery of braking member 39. As may be seen in particular in Figure 6, conical gear 27 is wholly housed within this volume V. Furthermore, epicyclical gear train 37 is housed against the rim, opposite the motor 21, and this is also advantageous in terms of overall compactness.

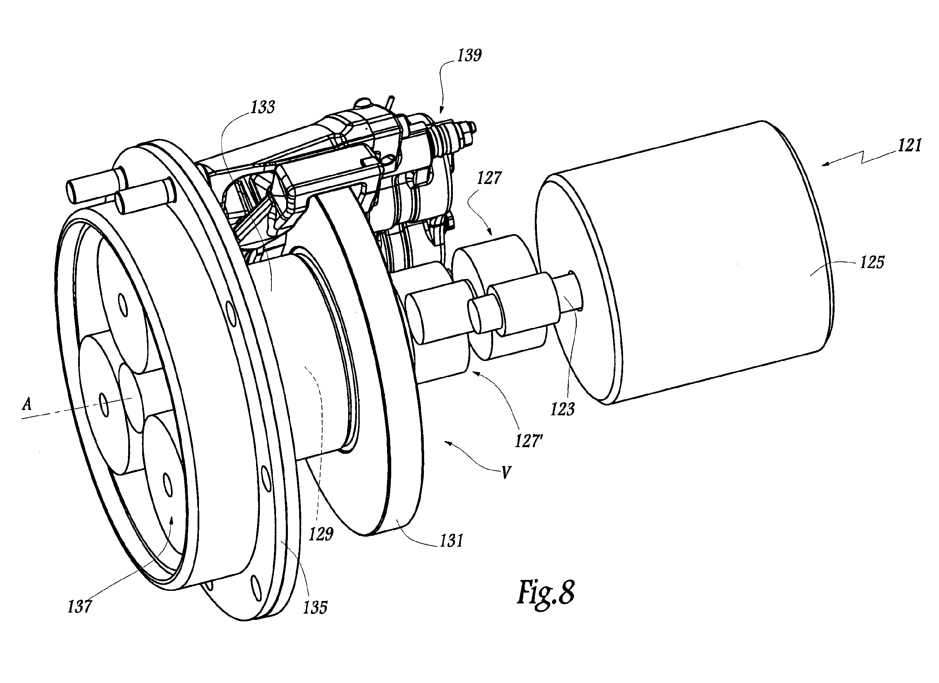

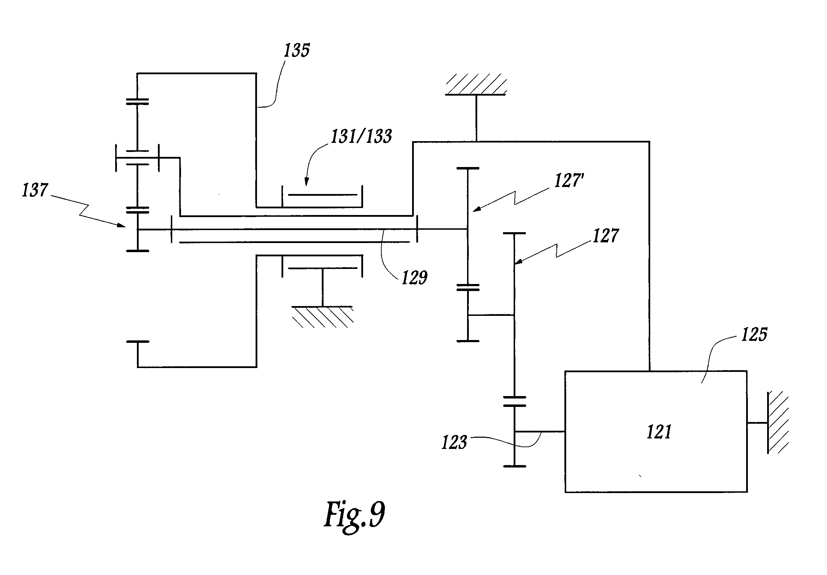

Figures 8 and 9 illustrate a variant embodiment of the drive for wheels 14. In these Figures mechanical elements which are similar to those in Figures 6 and 7 are allocated the same reference numbers increased by 100.

There is an electric motor 121, whose overall dimensions are slightly less than those of motor 21 in the first embodiment. Furthermore, this motor 121 has a rotation speed which is greater than that of first motor 21. This motor 121 has an output shaft 123 which extends parallel to axis A, but is nevertheless separate from it. This shaft 123 acts together with a first gear 127, of the straight-through type, which itself acts together with a second gear 127', also of the straight-through type. These two straight-through gears 127 and 127' are of a type which is in itself known.

Output 129 of straight-through gear 127' extends through disk 131, disk support 133 and rim 135. It acts together with an epicyclical gear train 137 in a similar way to the cooperation between gear 29 and gear train 37 in the first embodiment.

In these Figures 8 and 9 there are three reduction gear stages. The reduction coefficient provided by gear 127 is between 1.5 and 5 while gear 127' provides a lower reduction coefficient of between 1.5 and 3. In fact this gear 127' will occupy a smaller volume given that it is housed close to the braking assembly.

In the example illustrated the reduction coefficients provided by the two gears 127 and 127' are for example close to each other, having a value of 2. Furthermore, the reduction coefficient associated with gear train 137 is the same as in the first embodiment.

The overall reduction coefficient between motor 121 and wheel 14, which is not shown, is therefore between 15 and 30, in particular close to 20. As in the case of the first mode, the two gears 127 and 127' are wholly contained within the overall volume V of the braking assembly formed by mechanical members 131, 133 and 139.

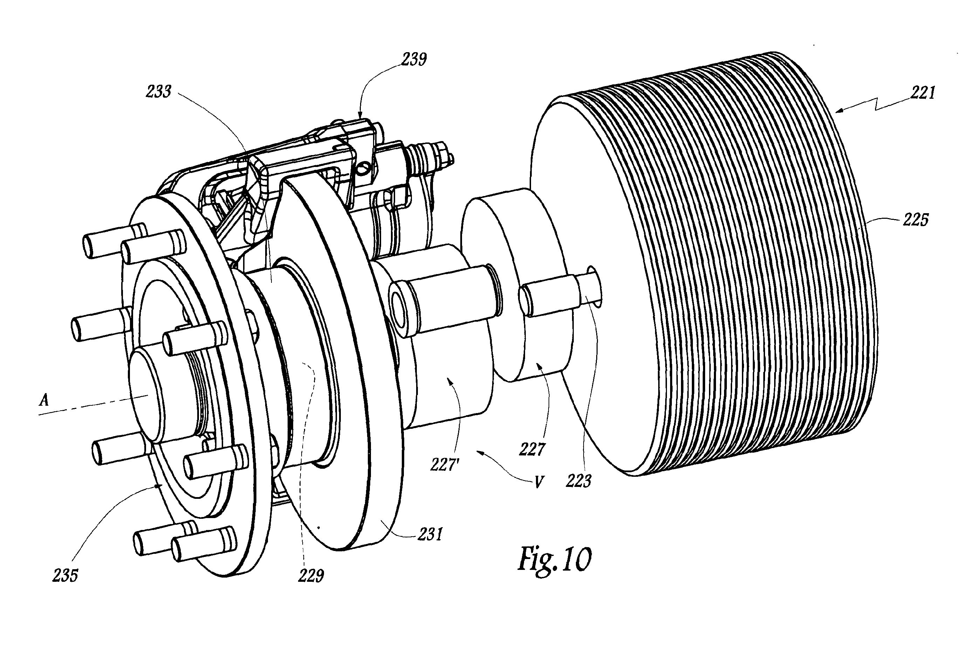

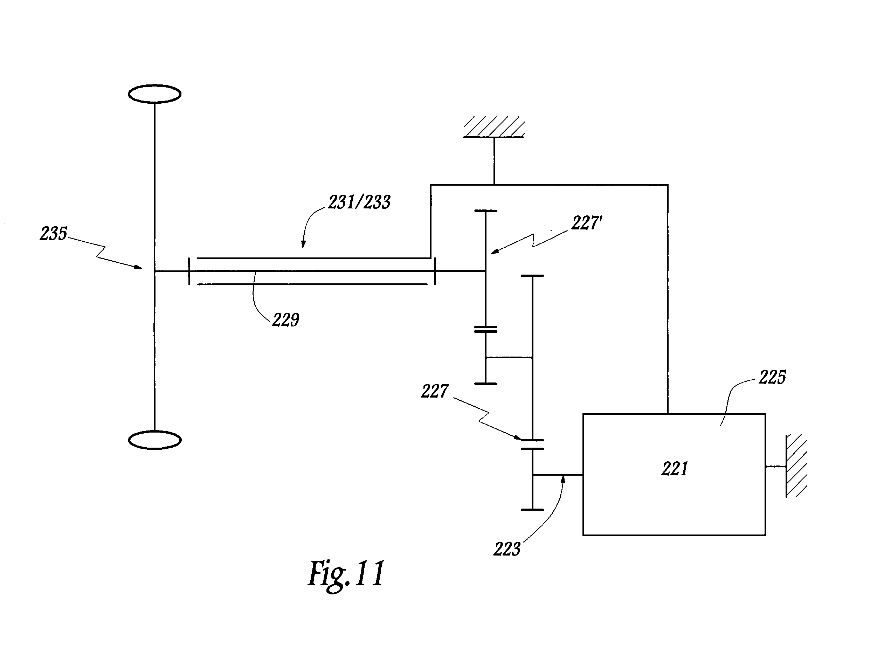

Figures 10 and 11 illustrate a third embodiment of the drive associated with wheels 14. In these figures mechanical elements which are similar to those in Figures 6 and 7 are allocated the same reference numbers, increased by 200.

In this third mode there are two straight-through gears 227 and 227' similar to 127 and 127' in the preceding embodiment. However, straight-through gear 227' acts directly with rim 235 without an intermediary epicyclical gear train such as 37 or 137 in the preceding figures.

The reduction coefficient associated with each straight-through gear is greater than in the second embodiment. Thus straight-through gear 227 has a reduction coefficient of between 3 and 5.5, in particular close to 5.10, whereas second straight-through gear 227' has a reduction coefficient of between 2.5 and 3, preferably close to 2.90. This being the case, the overall reduction coefficient between motor 221 and wheel 14 is between 7.5 and 16.5, in particular close to 15.

In this embodiment the two gears 227 and 227' are incorporated within the volume V of the braking assembly. In this respect it will be noted that the third embodiment provides a good compromise between various parameters, in particular the overall compactness of the motor and its reduction gears, the high value of the reduction ratio, the steering of the wheel system and the external volume of the wheel arch.

From the above descriptions it thus follows that the use of wheels with a smaller diameter is advantageous.

Indeed, it allows the structure of the transport vehicle equipped with such wheels to be simplified. Specifically, it is not necessary to allow for a raised section above the floor in order to support the feet of those passengers sitting on the seats mounted on the wheel arches. It will be noted that this lack of a raised section is also advantageous as regards accessibility for people with reduced mobility.

Moreover, these smaller-sized wheels allow for the provision of a central corridor which is conversely larger in size. This therefore allows passengers to move more easily through the vehicle.

It will be noted that the choice of a wheel diameter of between 700 and 750 mm is an advantageous compromise. Indeed, this value is small enough to guarantee the advantages mentioned above.

Furthermore, this value is large enough for the vehicle not to require too great a number of wheels. This being the case, the load capacity for the tyres is enough to ensure that an equivalent or even greater number of passengers can be carried compared to that allowed by the prior art.

It will also be noted that the fact of using a drive as described in the preceding figures offers specific advantages.

First of all the presence of wheels of small size, in comparison with the prior art, means that the electric motor itself, such as 21, 121 or 221, can have smaller dimensions. Furthermore, the presence of at least two reduction stages makes it possible to reduce the size of the motor even further.

In addition to this, the presence of these two stages makes it possible to dimension each stage optimally. In other words, each of these stages can be dimensioned in such a way that it is very compact.

Finally, use of these reduction stages, which are associated with a high reduction coefficient, makes it possible for the electric motor to have a very high rotation speed. This is advantageous because it guarantees that motor operation is optimised while ensuring that it takes up little space. In addition to this it permits easy steering of the axle.

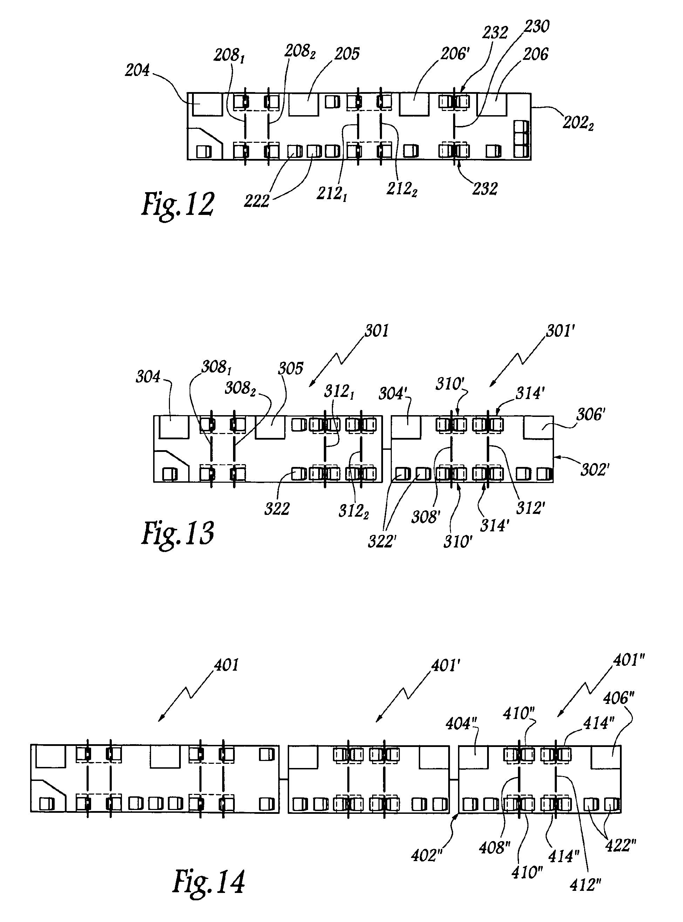

Figure 12 illustrates a first embodiment of the invention. In said Figure 12, mechanical elements similar to those in Figure 1 are given the same reference numbers, increased by 200.

The vehicle in Figure 12 differs from that in Figure 1 in that it includes a supplementary axle 230 fitted between drive axle 212₂ and the rear end 202₂ of body 202. Said axle 230, which is fitted with two wheels 232 whose diameter is roughly the same as that of the other wheels, is separated from the two aforementioned axles 212₁ and 212₂ by a supplementary door 206'.

This being the case, it follows that the total length of the vehicle in this Figure 12 is greater than that of the vehicle in Figure 1. By way of purely indicative example the vehicle in Figure 1 has a total length of around 12 metres, while that in Figure 12 has a total length of around 15 metres.

Figure 13 illustrates a second embodiment of the vehicle according to the invention. In said Figure 13, mechanical elements similar to those in Figure 1 are given the same reference numbers, increased by 300.

The transport vehicle in Figure 13 includes first of all a principal vehicle, reference 301, which is substantially identical to the transport vehicles in Figure 1. It includes, among other things, two front axles 308₁ and 308₂, as well as two rear axles 312₁ and 312₂. It also comprises a front door 304, as well as a central door 305. However this principal vehicle 301 does not have a rear door.

Said principal vehicle 301 is joined to a trailer 301', which is connected to it by any appropriate means. This trailer includes a body 302', as well as two axles, front axle 308', and rear axle 312' respectively, fitted with respective wheels 310' and 314'. This trailer 301' is also fitted with a front door 304' and a rear door 306', as well as seats 322'.

It should be noted that, of the two axles 308' and 312', one is fitted with drive wheels, while the other is fitted with steering wheels - in either order.

Figure 14 illustrates a third embodiment of the invention. In said Figure 14, mechanical elements similar to those in Figure 1 are given the same reference numbers, increased by 400.

The transport vehicle in Figure 14 comprises, like that shown in Figure 13, a principal vehicle 401, as well as a first trailer 401', similar respectively to principal vehicle 301 and trailer 301'. It is also provided with a second trailer 401 ", which has a structure substantially identical to that of first trailer 401'. Therefore it comprises in particular a body 402", two axles 408" and 412", fitted to wheels 410"and 414", as well as front doors 404" and 406", and seats 422" respectively. As in the case of first trailer 401', one of the axles, either the front or rear, is fitted with drive wheels, while the other axle, front or rear, is fitted with steering wheels.

Furthermore, it will be noted that the use of wheels of small diameter allows a high level of modularity as regards the architecture of the transport vehicle according to this invention. Indeed, it is possible to produce a vast range of transport vehicles of different lengths by using these small sized wheels.

The invention is not limited to the examples described and illustrated.

Thus, the vehicle according to the invention may be equipped with only two axles. This being the case, it has a length of around 6 metres, with a total live load of around 10 metric tons.

What is more, the invention can be applied to vehicles which have more than eight axles. Thus, the vehicle according to the invention may have twelve axles. In this case it could comprise a principal vehicle and two trailers, each of which is around 12 metres long, or a principal vehicle and five trailers, each of which would have a length of around 6 metres.

When an axle has steering wheels, there must necessarily be two of these, on either side of the axle. Conversely, in the case of non-steering wheels, a single axle may be fitted with four wheels, as pairs on either side of said axle.

In the various examples described and illustrated, all of the vehicle's wheels are of a small diameter, of between 700 and 750 mm. However, as a variant that is not illustrated provision may be made for some of the non-steering wheels located to the rear of the vehicle to have larger dimensions, closer to those usual in the prior art. In this case, these large rear wheels are for example placed beneath a bench seat, equipping vehicles of length over 9 metres.

## Claims

1. An urban transport vehicle of the bus type, comprising a body (2 ; 202 ; 302, 302' ; 402, 402', 402") mounted on axles (8₁, 8₂, 12₁, 12₂ ; 208₁, 208₂, 212₁, 212₂, 230 ; 308₁, 308₂, 312₁, 312₂, 308', 310'; 408₁, 408₂, 412₁, 412₂, 408', 412', 408", 412"), each axle having at least two wheels placed either side of the body, said transport vehicle having a total live load of more than 5 metric tons and an overall length of more than 5.5 metres, **characterised in that** the wheels (10₁, 10₂, 14₁, 14₂ ; 210₁, 210₂, 214₁, 214₂, 232 ; 310₁, 310₂, 314₁, 314₂, 310', 314' ; 410₁, 410₂, 414₁, 414₂, 410', 414', 410", 414") of at least one axle have a diameter of between 700 and 750 mm, each drive wheel of diameter between 700 and 750 mm being driven by an electric motor (21; 131; 231), at least two reduction gear stages (27, 37' ; 127, 127', 137 ; 227, 227') being provided between this motor and the wheel, each wheel being associated with a braking assembly (31, 33, 39; 131, 133, 139) defining an overall volume (V), having the shape of a cylinder whose central axis is the rotation axis of the wheel, and at least one reduction stage (27, 37' ; 127, 127', 137 ; 227, 227') lying within said overall volume (V).

2. A vehicle according to claim 1, **characterised in that** each wheel has a diameter (d) of between 730 and 740 mm, in particular around 737 mm.

3. A vehicle according to any one of the preceding claims, **characterised in that** said vehicle comprises at least one wheel arch (16, 18, 20) extending above at least one corresponding wheel, this wheel arch supporting at least one initial seat (22₁), while at least one other seat (22₂) placed at a distance from said wheel arch is provided for, the first and second seats being situated at substantially the same height.

4. A vehicle according to any one of the previous claims, **characterised in that** the vehicle comprises at least two front axles (8₁, 8₂ ; 208₁, 208₂), as well as at least two rear axles (12₁, 12₂ ; 212₁, 212₂, 230).

5. A vehicle according to claim 4, **characterised in that** it comprises three rear axles (212₁, 212₂, 230), one (230) of these rear axles being separated from the two other rear axles (212₁, 212₂) by means of a side door (206') in the vehicle body (202).

6. A vehicle according to any one of the preceding claims, **characterised in that** said vehicle comprises a principal vehicle (301 ; 401) having a body (302 ; 402) and at least two axles (308₁, 308₂, 312₁, 312₂ ; 408₁, 408₂, 412₁, 412₂) fitted with wheels (310₁, 310₂, 314₁, 314₂ ; 410₁, 410₂, 414₁, 414₂), as well as at least one trailer (301' ; 401', 401 "), the or each trailer having a body (302' ; 402', 402"), and at least two axles (308', 312' ; 408', 412', 408", 412") fitted with wheels (310', 314' ; 410' ; 414', 410", 414").

7. A vehicle according to any one of claims 3 to 6, **characterised in that** the two wheel arches opposite each other (18) define a central corridor (C) with a width (L) of over 1000 mm, preferably over 1100 mm, specifically close to 1200 mm;

8. A vehicle according to any one of the preceding claims, **characterised in that** said vehicle has a total live load of more than 9 metric tons.

## Patentansprüche

1. Transportfahrzeug für den Stadtverkehr von Art eines Busses, umfassend einen Grundkörper (2; 202; 302, 302'; 402, 402', 402"), der auf Achsen (8₁, 8₂, 12₁, 12₂; 208₁, 208₂, 212₁, 212₂, 230; 308₁, 308₂, 312₁, 312₂, 308', 310'; 408₁, 408₂, 412₁, 412₂, 408', 408", 412', 412") montiert ist, wobei jede Achse wenigstens zwei Räder aufweist, die an beiden Seiten des Grundkörpers platziert sind, wobei das Transportfahrzeug eine Gesamtnutzlast von mehr als 5 metrischen Tonnen und eine Gesamtlänge von mehr als 5,5 Meter aufweist, **dadurch gekennzeichnet, dass** die Räder (10₁, 10₂, 14₁, 14₂; 210₁, 210₂, 214₁, 214₂, 232; 310₁, 310₂, 314_{1,} 314₂, 310', 314'; 410₁, 410₂, 414₁, 414₂, 410', 414', 410", 414") von wenigstens einer Achse einen Durchmesser zwischen 700 und 750 mm aufweisen, jedes Antriebsrad eines Durchmessers zwischen 700 und 750 mm durch einen elektrischen Motor (21; 131; 231) angetrieben wird, wenigstens zwei Untersetzungsstufen (27, 37'; 127, 127', 137; 227, 227') zwischen diesem Motor und dem Rad vorgesehen sind, jedes Rad einer Bremsvorrichtung (31, 33, 39; 131, 133, 139) zugeordnet ist, die ein Gesamtvolumen(V) definieren, das die Form eines Zylinders aufweist, dessen Mittelachse die Rotationsachse des Rades ist, und wenigstens eine Getriebestufe (27, 37'; 127, 127', 137; 227, 227') innerhalb des Gesamtvolumens (V) liegt.

2. Fahrzeug nach Anspruch 1, **dadurch gekennzeichnet, dass** jedes Rad einen Durchmesser (d) zwischen 730 und 740 mm, insbesondere um 737 mm aufweist.

3. Fahrzeug nach einem der vorhergehenden Ansprüche, **dadurch gekennzeichnet, dass** das Fahrzeug wenigstens einen Radkasten (16, 18, 20) umfasst, der sich oberhalb des wenigstens einen entsprechenden Rades erstreckt, wobei der Radkasten wenigstens einen Anfangssitz (22₁) trägt, während wenigstens ein anderer Sitz (22₂), der in einem Abstand von dem Radkasten platziert ist, bereitgestellt ist, wobei die ersten und zweiten Sitze in der im wesentlichen gleichen Höhe angeordnet sind.

4. Fahrzeug nach einem der vorhergehenden Ansprüche, **dadurch gekennzeichnet, dass** das Fahrzeug sowohl wenigstens zwei Vorderachsen (8₁, 8₂; 208₁, 208₂), als auch wenigstens zwei Hinterachsen (12₁,12₂; 212₁, 212₂, 230) umfasst.

5. Fahrzeug nach Anspruch 4, **dadurch gekennzeichnet, dass** es drei Hinterachsen (212₁, 212₂, 230) umfasst, wobei eine (230) dieser Hinterachsen von den anderen zwei Hinterachsen (212₁, 212₂) mittels einer Seitentür (206') in dem Fahrzeuggrundkörper (202) getrennt ist.

6. Fahrzeug nach einem der vorhergehenden Ansprüche, **dadurch gekennzeichnet, dass** das Fahrzeug sowohl ein Hauptfahrzeug (301; 401), das einen Grundkörper (302; 402) und wenigstens zwei Achsen (308₁, 308₂, 312₁, 312₂; 408₁, 408₂, 412₁, 412₂) umfasst, die mit zwei Rädern (310₁, 310₂, 314₁, 314₂; 410₁, 410₂, 414₁, 414₂) ausgerüstet sind, als auch wenigstens einen Anhänger (301',; 401', 401") umfasst, wobei der oder jeder Anhänger einen Grundkörper (302'; 402', 402") und wenigstens zwei Achsen (308', 312'; 408', 412', 408", 412") umfasst, die mit Rädern (310', 314'; 410', 414', 410", 414") ausgerüstet sind.

7. Fahrzeug nach einem der Ansprüche 3 bis 6, **dadurch gekennzeichnet, dass** die zwei, einander gegenüberliegenden Radkästen (18) einen Mittelgang (C) mit einer Breite (L) von über 1000 mm, vorzugsweise über 1100 mm, insbesondere nahe bei 1200 mm definieren.

8. Fahrzeug nach einem der vorhergehenden Ansprüche, **dadurch gekennzeichnet, dass** das Fahrzeug eine Gesamtnutzlast von mehr als 9 metrischen Tonnen aufweist.

## Revendications

1. Véhicule de transport urbain du type bus, comprenant un corps (2 ; 202 ; 302, 302' ; 402, 402', 402") monté sur des essieux (8₁, 8₂, 12₁, 12₂ ; 208₁, 208₂, 212₁, 212₂, 230 ; 308₁, 308₂, 312₁, 312₂, 308', 310' ; 408₁, 408₂, 412₁, 412₂, 408', 412', 408", 412"), chaque essieu ayant au moins deux roues placées de chaque côté du corps, ledit véhicule de transport ayant un poids roulant total de plus de 5 tonnes métriques et une longueur globale de plus de 5,5 mètres, **caractérisé en ce que** les roues (10₁, 10₂, 14₁, 14₂ ; 210₁, 210₂, 214₁, 214₂, 232 ; 310₁, 310₂, 314₁, 314₂, 310', 314' ; 410₁, 410₂, 414₁, 414₂, 410', 414', 410", 414") d'au moins un essieu ont un diamètre compris entre 700 et 750 mm, chaque roue d'entraînement ayant un diamètre compris entre 700 et 750 mm étant entraînée par un moteur électrique (21 ; 131 ; 231), au moins deux étages d'engrenage de réduction (27, 37' ; 127, 127', 137 ; 227, 227') étant prévus entre ce moteur et la roue, chaque roue étant associée à un ensemble de freinage (31, 33, 39 ; 131, 133, 139) définissant un volume global (V) ayant la forme d'un cylindre dont l'axe central est l'axe de rotation de la roue, et au moins un étage de réduction (27, 37' ; 127, 127', 137 ; 227, 227') qui se trouve dans ledit volume global (V).

2. Véhicule selon la revendication 1, **caractérisé en ce que** chaque roue a un diamètre (d) compris entre 730 et 740 mm, en particulier aux environs de 737 mm.

3. Véhicule selon l'une quelconque des revendications précédentes, **caractérisé en ce que** ledit véhicule comprend au moins un passage de roue (16, 18, 20) s'étendant au-dessus d'au moins une roue correspondante, ce passage de roue supportant au moins un siège initial (22₁), alors qu'au moins un autre siège (22₂) placé à une certaine distance dudit passage de roue est prévu, les premier et deuxième sièges étant situés sensiblement à la même hauteur.

4. Véhicule selon l'une quelconque des revendications précédentes, **caractérisé en ce que** le véhicule comprend au moins deux essieux avant (8₁, 8₂ ; 208₁, 208₂) ainsi qu'au moins deux essieux arrière (12₁, 12₂ ; 212₁, 212₂, 230).

5. Véhicule selon la revendication 4, **caractérisé en ce qu'**il comprend trois essieux arrière (212₁, 212₂, 230), l'un (230) de ces essieux arrière étant séparé des deux autres essieux arrière (212₁, 212₂) au moyen d'une porte latérale (206') dans le corps de véhicule (202).

6. Véhicule selon l'une quelconque des revendications précédentes, **caractérisé en ce que** ledit véhicule comprend un véhicule principal (301 ; 401) ayant un corps (302 ; 402) et au moins deux essieux (308₁, 308₂, 312₁, 312₂ ; 408₁, 408₂, 412₁, 412₂) équipés des roues (310₁, 310₂, 314₁, 314₂ ; 410₁, 410₂, 414₁, 414₂) ainsi qu'au moins une remorque (301' ; 401', 401"), la ou chaque remorque ayant un corps (302' ; 402', 402") et au moins deux essieux (308', 312' ; 408', 412', 408", 412") équipés des roues (310', 314' ; 410' ; 414', 410", 414") .

7. Véhicule selon l'une quelconque des revendications 3 à 6, **caractérisé en ce que** les deux passages de roue opposés entre eux (18) définissent un corridor central (C) avec une largeur (L) supérieure à 1 000 mm, de préférence supérieure à 1 100 mm, en particulier proche de 1 200 mm.

8. Véhicule selon l'une quelconque des revendications précédentes, **caractérisé en ce que** ledit véhicule a un poids roulant total supérieur à 9 tonnes métriques.
